# EUROPEAN PATENT SPECIFICATION

(11) **EP 1 334 847 B1**
(45) Date of publication and mention of the grant of the patent: **21.09.2005**
(21) Application number: 03075386.7
(22) Date of filing: 10.02.2003
(51) Int. Cl.: B60D 1/06

(54) **Stabilizer-coupling**
Stabilisator-Anhängerkupplung
Attelage de remorque stabilisateur

(30) Priority: 11.02.2002 NL 1019937
(43) Date of publication of application: 13.08.2003
(73) Proprietor: Sanders, Teun Johan Hugo Leendert, 6862 WG Oosterbeek (NL)
(72) Inventor: Sanders, Teun Johan Hugo Leendert, 6862 WG Oosterbeek (NL)
(74) Representative: 't Jong, Bastiaan Jacobus

(56) References cited:
- EP-A- 0 320 202
- CH-A- 219 540
- DE-C- 649 571
- US-A- 2 217 234
- US-A- 2 459 448

## Description

The invention relates to a coupling as defined in the introducing part of claim 1 with which a trailer can be coupled to a pulling vehicle.

A stabilizer coupling of the present type is known from CH-A-219.540. A slidable coupling member is herein urged into and held in the closed position relative to a fixed coupling member.

The invention now has for its object to provide a coupling of the described type which is a stabilizer coupling and maintains the set force more precisely for a longer time.

This object is achieved with the trailer coupling according to the invention as characterized in claim 1. The usual towing ball on the pulling vehicle is gripped with a clamping force so that friction occurs in the case of a relative movement of the coupling relative to the towing ball. This friction provides damping of the movements, in particular the pitching movements and the yawing movements of a trailer, relative to the pulling vehicle such as can occur during driving. Such a coupling therefore stabilizes the trailer. No significant wear occurs in the operating mechanism, not even after prolonged use, so that the set clamping force is maintained for a long time. The additional advantage is moreover gained that the transmission of force from the operating lever to the slidable coupling member proceeds such that relatively little force is required in the final part of the stroke, so that the coupling according to the invention is very easy to use.

It is noted that from US-A-2459448 a coupling is known in which the movable coupling member is pivotably mounted to the coupling housig.

The measure of claim 2 is preferably applied. The clamping force of the coupling members is less greatly dependent here on the exact position of the slidable coupling member relative to the fixed coupling member. The clamping force hereby remains within precisely definable limits in greatly varying conditions of use.

In a further development the measure of claim 3 is applied. The clamping force can also be increased by increasing the number of cup springs. When the coupling is used for a heavy trailer, a desired greater clamping force can hereby still be adjusted.

A very favourable further development is characterized in claim 4. When the coupling is closed, the movement of the transmission mechanism will be passed without significant relative movement to the integrally functioning assembly of coupling member, plungers and cup springs. As soon as the coupling part is in contact with the coupling ball, the first plunger will be urged forward relative to the second plunger until the cup spring package lies against the stop of the second plunger. The final part of the stroke of the moving mechanism, wherein the clamping force is applied to the coupling ball, is thus performed in hydraulically enhanced manner, so that a considerable distance of this latter part of the stroke can be performed with relatively little force.

For accurate adjustment of the desired clamping force, the measure of claim 5 is preferably applied.

A suitable embodiment is characterized in claim 6. If the coupling part in question were to rotate unintentionally, the shoulder nevertheless prevents this coupling part being released from the coupling, so that a coupling of the trailer coupling to the towing ball is still maintained at all times.

A further safety is achieved with the measure of claim 7. Even if the two pivotally connected arms were to become defective, the slidable coupling member cannot move too far to the rear since it is held back by the blocked connecting arm.

The trailer coupling according to the general inventive concept is very suitable for integration therein of a lock, whereby unintentional opening of the coupling can be prevented. A suitable embodiment is characterized in claim 8. The lock plate secures the connecting arm so that it continues to hold the coupling in the closed position.

A further favourable development is characterized in claim 9. Moreover locking the lever according to this embodiment further ensures that the coupling cannot be forced and that the locking of the connecting arm cannot be broken by for instance exerting very great force.

In order to see whether the towing ball is received in the correct position between the coupling members, the measure of claim 10 is preferably applied. When the ball has not yet been received between the coupling members, the indicator member will remain in a low position owing to the force of gravity, while when the ball is indeed received between the coupling members the indicator member is pressed upward by the ball and it becomes visible that the ball has been received at the correct position.

The measure of claim 11 is preferably applied. With the forces occurring with the moving mechanism as applied in the trailer coupling, this material is suitable for exerting sufficient friction on the towing ball and being sufficiently wear-resistant therein to enable use thereof without further friction covering.

An embodiment of the coupling according to the invention is shown in the annexed figures.
Figure 1 shows a longitudinal section of a coupling according to the invention in a first embodiment.
Figure 2 shows a cross-section of the coupling of figure 1.
Figure 3 shows a view corresponding with figure 1 of a slightly different embodiment.
Figure 4 shows a cross-section corresponding with figure 2 of the coupling of figure 3.
   The shown coupling comprises a housing 1 which is manufactured from a rectangular steel profile, as can be seen clearly in figure 2.
Figure 5 shows a view corresponding with figure 1 of another embodiment.
Figure 6 shows a partly broken-away perspective view as according to arrow VI in figure 5.

An end plate 2 is welded into housing 1 on the front end of the coupling, in which plate is arranged a hole provided with screw thread. A first coupling part 3 is screwed into this hole. This coupling part 3 is made of suitable friction material, such as for instance sinter bronze, but is preferably of aluminium bronze. Coupling part 3 has a hollow recess which can lie against a spherical surface of a ball 6 of a towing hook 5. Coupling part 3 is adjustable due to the screwed fitting, and can be adjusted to compensate for wear by rotation with a socket wrench which can engage in a hexagonal recess in the front surface of coupling part 3. For adjustment purposes a plastic cap 36 can be removed from the coupling. The set position of coupling part 3 is secured using a locking screw 4.

Situated opposite the front coupling part 3 is a slidable coupling part 7 which can likewise be manufactured from suitable friction material. Coupling part 7 is slidable to allow the wide part of ball 6 through from below into the space defined between coupling parts 3 and 7. The slidable coupling part 7 likewise has a hollow recess which can lie against the spherical ball 6 of towing hook 5.

The slidable coupling part 7 is enclosed in housing 1, and in particular in the lower part thereof which is bounded at the top by a plate 35 welded fixedly in housing 1.

Coupling part 7 is moved reciprocally in housing 1 using a pressure piece 8 which can be moved in the direction of and away from coupling part 3 by means of a knee lever mechanism 9 to be described further. On its side directed toward coupling part 3, the pressure piece 8 lies against a cup spring package 19 which is accommodated in turn in a recess of the slidable coupling part 7. By sliding the pressure piece in the direction of coupling part 3 the cup spring package is compressed and the slidable coupling part 7 is thus pressed resiliently against ball 6.

During the return movement the pressure piece 8 co-displaces the coupling part 7 by means of a pin 20 which is connected to the slidable coupling part 7 and which protrudes through a slot opening 21 in pressure piece 8. This slot opening leaves sufficient space to allow the stroke of pressure piece 8 relative to coupling part 7 when the cup spring package 19 is compressed.

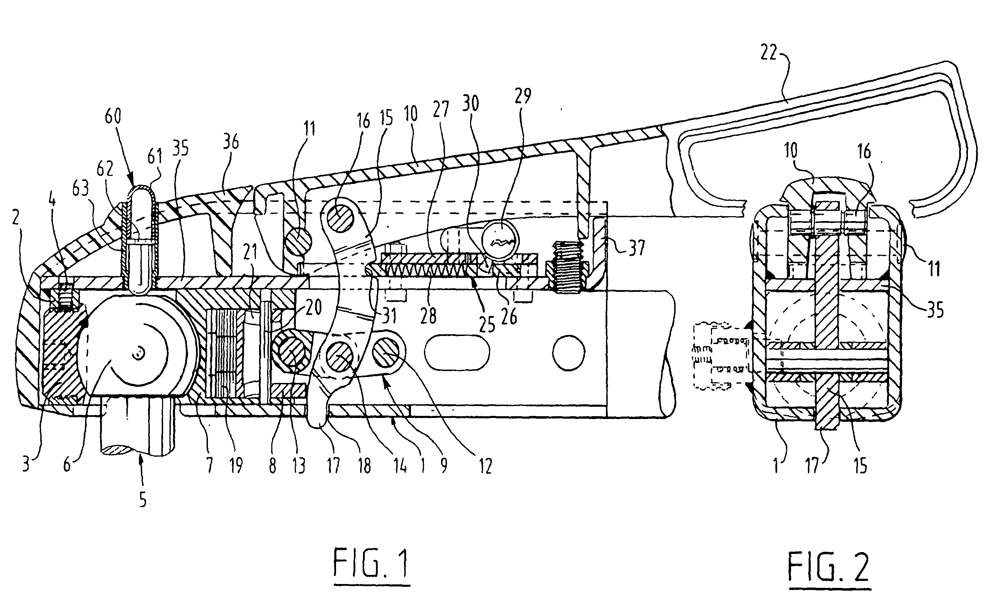

The above mentioned knee lever mechanism 9 comprises in the usual manner two arms which are mutually connected by a knee hinge 14. The end of the pair of arms seen on the right in figure 1 is arranged fixedly in housing 1 for pivoting by means of a pivot shaft 12. The opposite end of the pair of arms is connected to the pressure piece by means of a pivot shaft 13.

An upward extending arm 15 engages on knee hinge shaft 14. This arm 15 is connected for pivoting on its upper end by means of a pivot shaft 16 to a lever 10 which is provided with a handle and which is itself mounted pivotally on housing 1 by means of a pivot shaft 11.

It will be apparent that by moving the handle 22 upward the lever 10 swings upward about pivot shaft 11. Pivot shaft 16, and therefore the arm 15 connected thereto, hereby also moves upward. Knee hinge 14 is hereby also pulled upward, wherein knee lever 9 is pulled through its dead point and, with a further movement of knee hinge 14 in upward direction, the ends of the knee lever move toward each other, i.e. pivot shaft 13, and therefore pressure piece 8, moves in the direction of pivot shaft 12.

At the beginning of this movement the cup spring package 19 will first be released, wherein the pressure piece moves to the right relative to the slidable coupling part 7 until an edge of slotted opening 21 of pressure piece 8 comes into contact with pin 20. With a continued upward movement of arm 15, pressure piece 8 co-displaces the pin 20 of the slidable coupling part 7 so that ball 6 is released.

In reverse sequence the coupling is placed on ball 6 with the lever 10 in an upward pivoted position. By subsequently pressing down the handle 2 the knee lever 9 is urged into an extended position, wherein pressure piece 8 is urged in the direction toward the ball. As soon as the slidable coupling part 7 is in contact with ball 6 and with a further movement of handle 22 in downward direction, pressure piece 8 will continue to displace to the left relative to the slidable coupling part 7, wherein the cup spring package 19 is compressed. The downward movement of handle 22 continues into the shown position, wherein knee lever 9 has been pressed through its dead point and is therefore in a stable situation.

As stated above, coupling part 3 is adjustable in order to achieve a correct degree of compression of cup spring package 19, and therefore a desired pinching force of coupling parts 3 and 7 on ball 6.

Figure 1 shows clearly that the arm 15 is provided on its lower end with a protruding cam 17 which in the locking position of the coupling protrudes into an opening 18 of housing 1. An additional security is hereby achieved in that, in the case of unexpected failure of knee lever 9, a rearward displacement of coupling part 7 relative to housing 1 is nevertheless prevented. This is because during the rearward movement the pressure piece 8 will run up against lever 15, which is held fast by the engagement in opening 18.

In the embodiment shown in figures 1-4 the coupling is provided with an indicator member 60. It is hereby possible to see whether coupling ball 6 is received in correct manner between coupling members 3, 7.

The indicator member comprises a pin-like element 61 which is received in freely slidable manner in a holder 63. The pin-like member is provided midway with a shoulder 62 which bounds the free movement potential in upward and downward direction, in that this shoulder 62 comes to lie against stops in sleeve 63. The indicator member can be provided with a suitable colour, for instance green.

As soon as the coupling ball is received into the space between coupling members 3, 7, the upper surface of ball 6 will come into contact with the lower end of pin-like member 61 and displace this upward in sleeve 63 counter to the force of gravity. The upper end of this member hereby comes to lie outside the contours of the coupling, so that it is readily visible. It can thus be seen that the coupling ball 6 is accommodated at the correct position.

The coupling is advantageously provided with a lock mechanism 25 which co-acts with arm 15.

Lock mechanism 25 comprises a slide 26 which is slidable on plate 35 and which is enclosed in vertical direction by an enclosing plate 27. Mounted on enclosing plate 27 is a per se known profile cylinder 29, the actuator cam 30 of which protrudes through enclosing plate 27 and into an opening in slide 26. It can be readily understood that by rotating the lock, and thereby moving actuator cam 30, the slide 26 can be moved reciprocally. The construction is herein chosen such that in a blocked position of profile cylinder 29 the slide 26 is situated in the position shown in figure 1, wherein the front end of slide 26 protrudes into a recess 31 of arm 15. Arm 15 cannot therefore move lever 10 upward.

In a recess in slide 26 is received a spring 28, an end of which is fixed in enclosing plate 27. The compression spring ensures that slide 26 is loaded in the direction toward arm 15, so that slide 26 falls automatically into the locking position engaging in recess 31 of lever 15.

The whole lock mechanism is theft-proof and accommodated inaccessibly in the housing. At the rear end the lock mechanism is covered by an upward bent end 37 of plate 35.

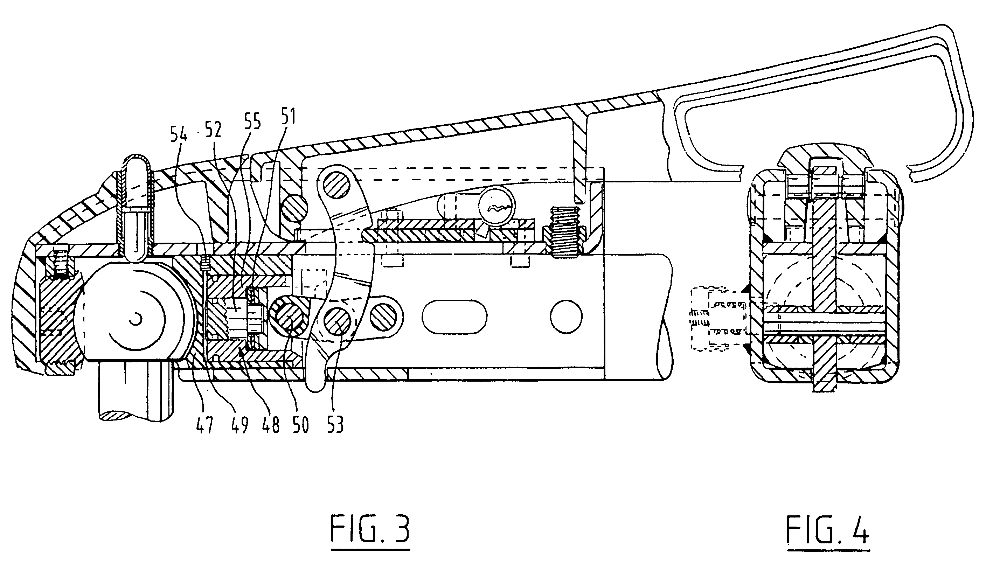

The embodiment of figure 3 corresponds for the greater part with that of figure 1. Only the components differing from those in figure 1 are further discussed here.

The slidable coupling part 47 is moved reciprocally by a pressure piece 48. Pressure piece 48 is driven indirectly by the knee lever mechanism.

Pressure piece 48 is constructed from a number of elements. The knee lever is connected by means of pivot shaft 53 to a pusher 50 which lies against a first plunger 52 via a number of cup springs 51. This plunger is received in sealed manner by means of an O-ring in a cylinder bore of a second plunger 55 of larger diameter. This second plunger 55 is likewise received in sealed manner by means of an O-ring in a cylinder bore in the slidable coupling part 47. Between the front ends of plungers 52 and 55 and the opposite wall part of slidable coupling part 47 is formed a chamber 49, which is filled with hydraulic oil. The slidable coupling part 47 is provided for this purpose with a filling plug 54.

When the coupling is being closed, the movement of the knee lever mechanism will be transmitted without significant relative movement onto the integrally functioning pressure piece 48 until the slidable coupling part 47 lies against the coupling.

With a continuing movement the pusher will urge the first plunger forward relative to second plunger 55 via cup springs 51, until cup spring package 51 lies against the shoulder in second plunger 55. The latter part of the stroke of the knee lever, wherein the working load is applied to the ball, is thus performed, as it were, in hydraulically enhanced manner so that a considerable distance of this latter part of the stroke can be performed with a relatively small force.

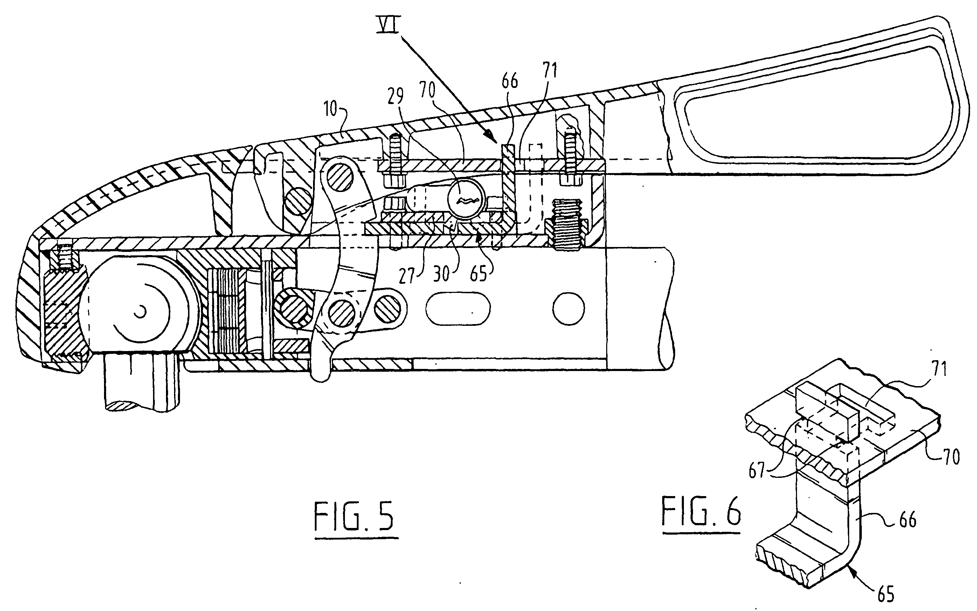

The embodiment of figure 5 is substantially the same as that of figure 1. The indicator member is absent and the lock mechanism is further developed. The corresponding parts will therefore not be described and are not provided with reference numerals.

In the lock mechanism of the embodiment of figure 5 the slide 26, which can be moved reciprocally in the housing of the coupling using actuator cam 30 of profile cylinder 29, is provided with an upward extending protrusion 66. As figure 6 shows, this protrusion is provided with two notches 67. An engaging plate 70 is mounted on lever 10 using screw bolts. This engaging plate 70 is provided with a T-shaped recess 71. The wide part of recess 71 is dimensioned such that protrusion 66 can be placed therethrough with its full width. The narrow part of T-shaped recess 71 is dimensioned such that it can receive the portion of protrusion 66 in which recesses 67 are arranged.

In the opened position of slide 66 moved to the right, the lever 10 can thus be moved downward, wherein the wide part of recess 71 drops over the standing part 66 of slide 65. By rotating the profile cylinder the slide 65 can then be moved to the left, wherein the engaging plate 70 is held fast by the portions of the standing part 66 protruding above recess 67. Lever 10 can hereby no longer be moved upward. The lever can optionally be provided with a weakening, whereby it will break when a great force is exerted in an attempt to force the lock. This ensures that the trailer cannot be released from the pulling vehicle and stolen.

Coupling members 3, 7 are preferably manufactured from aluminium bronze. This material is found to be very suitable for this application. No separate friction coverings are needed on the coupling members in order to still achieve a good friction damping, wherein a long lifespan of the coupling is thus also ensured without any maintenance being required in respect of the friction surfaces.

## Claims

1. Trailer coupling for coupling to a towing ball (6), comprising a coupling housing (1), first (3) and second (7) coupling members which are arranged in the housing, wherein at least one (7) of the coupling members is mounted in the housing (1) for sliding between an open position at a distance from the other coupling member (3) and a closed position closer thereto, wherein the slidable coupling member (7) is connected to the housing (1) by two arms (9) connected pivotally to each other, which arms (9) lie substantially mutually in line in the closed position, said coupling members comprise hollow friction-coupling surfaces directed toward each other, **characterised in that** an additional connecting arm (15) is connected pivotally to both arms (9) and to a separate operating lever (22) connected pivotally to the housing (1).

2. Trailer coupling as claimed in claim 1, wherein the slidable coupling member (7) is connected to the arms (9) through a package of cup springs.

3. Trailer coupling as claimed in claim 2 or 3, wherein the number of cup springs (19) in the package can be varied.

4. Trailer coupling as claimed in claim 2, wherein the cup springs (19), (51) lie against a first plunger (52) which is received in sealed manner in a second plunger (55) of larger diameter and which is movable between an extended position and a retracted position wherein it lies against a stop of the second plunger (55) which is received in a cylinder bore in the slidable coupling part (47), and wherein the cylinder bore is filled with a liquid.

5. Trailer coupling as claimed in any of the foregoing claims, wherein the coupling part (3) lying opposite the slidable coupling part is accommodated in the housing (1) for adjustment in the direction toward said slidable coupling part (7), (47).

6. Trailer coupling as claimed in claim 5, wherein the adjustable coupling part (3) is adjustable in that it engages with screw thread into a threaded hole of the housing (1), and wherein this coupling part (3) is provided with a shoulder on the side directed toward the slidable coupling part (7).

7. Trailer coupling as claimed in any of the foregoing claims, wherein the connecting arm (15) is provided with a protruding cam (17), which in the closed position engages in an opening in the housing.

8. Trailer coupling as claimed in any of the foregoing claims, comprising a slide (26) received slidably in the housing (1) a profile cylinder (29) which is received in the housing (1) and a rotatable actuator cam (30) of which engages on the side (26), whereby the slide (26) is slidable between a closing position, wherein an edge thereof engages on the connecting arm (15) and an opened position wherein the connecting arm (15) is released.

9. Trailer coupling as claimed in claim 8, wherein the slide (26) is provided with a locking protrusion (66) which in the closing position engages the lever (10) in locking manner.

10. Trailer coupling as claimed in any of the foregoing claims, comprising a pin-like indicator member (60) slidable in substantially freely vertical manner above a position located between the coupling parts (3) (7).

11. Trailer coupling as claimed in any of the foregoing claims, wherein the coupling members (3), (7) are manufactured from aluminium bronze.

## Patentansprüche

1. Hängerkupplung zur Ankupplung an einen Kugelkopf (6) mit
einem Kupplungsgehäuse (1), ersten (3) und zweiten (7) Kupplungsteilen, die in dem Gehäuse angeordnet sind, wobei zumindest eines (7) der Kupplungsteile zum Verschieben zwischen einer geöffneten Stellung in einem Abstand von dem anderen Kupplungsteil (3) und einer geschlossenen Stellung näher bei diesem in dem Gehäuse (1) angebracht ist, wobei das verschiebbare Kupplungsteil (7) über zwei drehbar miteinander verbundene Arme (9) mit dem Gehäuse (1) verbunden ist und die Arme (9) in der geschlossenen Stellung im wesentlichen gegenseitig ausgerichtet liegen, die Kupplungsteile Hohl-Reibungskupplungs-Oberflächen, die zueinander gerichtet sind, aufweisen, **dadurch gekennzeichnet, daß**
ein zusätzlicher Verbindungsarm (15) drehbar mit beiden Armen (9) und einem separaten Betätigungshebel (22), der drehbar mit dem Gehäuse (1) verbunden ist, verbunden ist.

2. Hängerkupplung nach Anspruch 1, bei der das verschiebbare Kupplungsteil (7) mit den Armen (9) über eine Baugruppe von Tellerfedern verbunden ist.

3. Hängerkupplung nach Anspruch 2 oder 3, bei der die Anzahl der Tellerfedern (19) in der Baugruppe variiert werden kann.

4. Hängerkupplung nach Anspruch 2, bei der die Tellerfedern (19), (51) an einem ersten Kolben (52) anliegen, der in abgedichteter Weise von einem zweiten Kolben (55) größeren Durchmessers aufgenommen wird und bewegbar ist zwischen einer ausgefahrenen Position und einer zurückgezogenen Position, bei der er an einem Anschlag des zweiten Kolbens (55) anliegt, welcher in einer Zylinderbohrung von dem verschiebbaren Kupplungsteil (47) aufgenommen wird, wobei die Zylinderbohrung mit einer Flüssigkeit gefüllt ist.

5. Hängerkupplung nach irgendeinem der vorangehenden Ansprüche, bei der das gegenüber dem verschiebbaren Kupplungsteil liegende Kupplungsteil (3) in dem Gehäuse (1) zur Einstellung in der Richtung zu dem verschiebbaren Kupplungsteil (7), (47) hin untergebracht ist.

6. Hängerkupplung nach Anspruch 5, bei der das einstellbare Kupplungsteil (3) dergestalt einstellbar ist, daß es mit einem Schraubengewinde in ein Gewindeloch des Gehäuses (1) eingreift, wobei dieses Kupplungsteil (3) auf der zu dem verschiebbaren Kupplungsteil (7) hin gerichteten Seite mit einer Schulter versehen ist.

7. Hängerkupplung nach irgendeinem der vorangehenden Ansprüche, bei der der Verbindungsarm (15) mit einer hervorstehenden Nocke (17) versehen ist, die in der geschlossenen Stellung in eine Öffnung in dem Gehäuse eingreift.

8. Hängerkupplung nach irgendeinem der vorangehenden Ansprüche mit einem Schieber (26), der verschiebbar von dem Gehäuse (1) aufgenommen wird, einem Profilzylinder (29), der in das Gehäuse (1) aufgenommen wird und einer drehbaren Stellnocke (30), welche an dem Schieber (26) angreift, wobei der Schieber (26) zwischen einer geschlossenen Stellung, in der eine Kante desselben an dem Verbindungsarm (15) angreift und einer offenen Stellung, in der der Verbindungsarm (15) freigegeben ist, verschiebbar ist.

9. Hängerkupplung nach Anspruch 8, bei der der Schieber (26) mit einem Verriegelungsvorsprung (66) versehen ist, der in der geschlossenen Stellung in den Hebel (10) in verriegelnder Weise eingreift.

10. Hängerkupplung nach irgendeinem der vorangehenden Ansprüche mit einem stiftartigen Anzeigeelement (60), das in im wesentlichen freier vertikaler Weise über einer Position, die sich zwischen den Kupplungsteilen (3) (7) befindet, verschoben werden kann.

11. Hängerkupplung nach irgendeinem der vorangehenden Ansprüche, bei der die Kupplungsteile (3), (7) aus Aluminiumbronze gefertigt sind.

## Revendications

1. Attelage de remorque destiné à être couplé à une boule de remorquage (6), comprenant un boîtier d'attelage (1), des premier (3) et second (7) éléments d'attelage qui sont agencés dans le boîtier, dans lequel au moins l'un (7) des moyens d'attelage est monté dans le boîtier (1) pour coulisser entre une position ouverte à une certaine distance de l'autre élément d'attelage (3) et une position fermée plus à proximité de celui-ci, dans lequel l'élément d'attelage (7) coulissant est raccordé au boîtier (1) par deux bras (9) raccordés de manière pivotante entre eux, lesquels bras (9) sont sensiblement alignés mutuellement dans la position fermée, lesdits éléments d'attelage comprennent des surfaces creuses d'attelage par frottement dirigées les unes vers les autres, **caractérisé en ce qu'**un bras de raccordement supplémentaire (15) est raccordé de manière pivotante aux deux bras (9) et à un levier de commande (22) séparé raccordé de manière pivotante au boîtier (1).

2. Attelage de remorque selon la revendication 1, dans lequel l'élément d'attelage coulissant (7) est raccordé aux bras (9) par d'intermédiaire d'un ensemble de ressorts Belleville.

3. Attelage de remorque selon la revendication 2 ou 3, dans lequel le nombre de ressorts Belleville (19) dans l'ensemble peut être modifié.

4. Attelage de remorque selon la revendication 2, dans lequel les ressorts Belleville (19), (51) se trouvent contre un premier piston plongeur (52) qui est reçu d'une manière étanche dans un second piston plongeur (55) de plus grand diamètre et qui est mobile entre une position déployée et une position rétractée dans laquelle il se trouve contre une butée du second piston plongeur (55) qui est reçue dans un alésage de cylindre dans la partie d'attelage coulissant (47), et dans lequel l'alésage de cylindre est rempli avec un liquide.

5. Attelage de remorque selon l'une quelconque des revendications précédentes, dans lequel la partie d'attelage (3) se trouvant à l'opposé de la partie d'attelage coulissant est logée dans le boîtier (1) pour le réglage de la direction vers ladite partie d'attelage coulissant (7), (47).

6. Attelage de remorque selon la revendication 5, dans lequel la partie d'attelage réglable (3) est réglable en ce qu'elle se met en prise avec le filetage de vis dans un trou fileté du boîtier (1) et dans lequel cette partie d'attelage (3) est prévue avec un épaulement sur le côté dirigé vers la partie d'attelage coulissant (7).

7. Attelage de remorque selon l'une quelconque des revendications précédentes, dans lequel le bras de raccordement (15) est prévu avec une came en saillie (17) qui, dans la position fermée, se met en prise dans une ouverture située dans le boîtier.

8. Attelage de remorque selon l'une quelconque des revendications précédentes, comprenant une coulisse (26) reçue de manière coulissante dans le boîtier (1), un cylindre profilé (29) qui est reçu dans le boîtier (1) et dont une came (30) rotative d'actionneur se met en prise sur la coulisse (26), moyennant quoi la coulisse (26) peut coulisser entre une position de fermeture dans laquelle son bord se met en prise sur le bras de raccordement (15) et une position ouverte dans laquelle le bras de raccordement (15) est libéré.

9. Attelage de remorque selon la revendication 8, dans lequel la coulisse (26) est prévue avec une saillie de verrouillage (66) qui, dans la position de fermeture, met en prise le levier (10) de manière verrouillée.

10. Attelage de remorque selon l'une quelconque des revendications précédentes, comprenant un élément indicateur en forme d'aiguille (60) pouvant librement coulisser de manière sensiblement verticale au dessus d'une position située entre les parties d'attelage (3) (7).

11. Attelage de remorque selon l'une quelconque des revendications précédentes, dans lequel les éléments d'attelage (3), (7) sont fabriqués à partir de bronze d'aluminium.
